# EUROPEAN PATENT APPLICATION

(11) **EP 3 244 291 A1**
(43) Date of publication of application: **15.11.2017**
(21) Application number: 17170875.3
(22) Date of filing: 12.05.2017
(51) Int. Cl.: G06F 3/041, B60K 37/00

(54) **INPUT/OUTPUT DEVICE AND METHOD FOR OPERATING THE SAME**

(30) Priority: 13.05.2016 DE 102016108899
(71) Applicant: Visteon Global Technologies, Inc., Van Buren Township, MI 48111-5711 (US)
(72) Inventor: STELANDE, Bertand, Thimiszer, 4890 (BE); NOLTEN, Dirk, D-52372 Kreuzau (DE); VAN LAACK, Alexander, D-52072 Aachen (DE)
(74) Representative: Dummett Copp LLP

(57) **Abstract**

The invention relates to a combined input and output device (1) comprising a screen (2) for displaying at least one operating element, a touchscreen arranged above the screen (2), for detecting a position of a contact with the operating surface of the touchscreen, and a frame (4), wherein the screen (2) is arranged under the touchscreen in the frame (4), and, on the frame (4), a plurality of mini switches (5) are arranged, on which the touchscreen rests.

## Description

The invention relates to a combined input and output device comprising a screen for displaying at least one operating element, for detecting a position of a contact with the operating surface of the touchscreen, and a frame.

The invention further relates to a method for operating an input and output device comprising a touchscreen arranged in a frame.

Touchscreens (touch-sensitive screens) are used in numerous sectors today, such as, for example, in screens of smartphones, computers, or in displays for controlling and regulating devices located in a vehicle. For this purpose, on a screen, applications or operating elements are displayed, which can be shifted, enlarged or reduced, or selected/executed by the user.

Known touchscreens do not allow separation of selection and execution of an operating element; thus, the selection of an operating element occurs via the touchscreen by sliding or swiping the finger of a user, and the selection or execution of the application or of the operating element occurs by tapping on the operating element. In particular, in displays in vehicles, the strain on the user is increased as a result, when he/she operates the touchscreen while driving.

Haptic touchscreens are capable of providing the user haptic feedback, which normally is generated by a high-frequency vibration. However, this feedback is generated only after the user has run the application or activated the control panel. Therefore, a haptic feedback is only a confirmation and not an assistance in the selection.

In WO 2006/074712 A2, an input device with a touchscreen and a force sensor is described, in which, by touching a control panel of the touchscreen or by pressing on a control panel of the touchscreen in the area of the display of the operating element, a warning is generated.

It is the object of the invention to provide a touchscreen which enables an easier operation.

The object of the present invention is achieved by a (haptic) combined input and output device of the type described above, in which the display is arranged under the touchscreen in the frame and a plurality of mini switches are arranged on the frame on which the touchscreen rests.

The screen is used for displaying at least one operating element or application/software application.

The frame can also be formed by the housing of an electrical device or by a surface, for example, the surface of a dashboard of a vehicle, in which the touchscreen is arranged, so that the frame is at the same time also the housing or the surface in which the touchscreen is arranged.

The touchscreen preferably comprises a touch plate and a touch sensor.

Such an input and output device enables a separation of selection and execution. What is achieved thereby is that mini switches are arranged under a transparent touch plate. Such an arrangement provides the user with haptic feedback.

As a result of the touch plate being much lighter than the screen itself, a small movement during the clicking is made possible, even in the case of larger touchscreens.

By actuation of the mini switch, preferably a haptic signal can be output/sensed. If the user actuates the touchscreen in a manner in which the user increases the pressure on the touchscreen, in order to start an application or to activate a control panel, a haptic signal/feedback is generated.

A suitable mini switch, which upon actuation generates a haptic signal due to the pressing of the switch ("clicking"), has small installation dimensions.

In a preferred embodiment of the invention, the touch surface of the touchscreen rests on the mini switches. In this embodiment, the mini switches are arranged between the frame and the touch surface.

In another preferred embodiment of the invention, the touch sensor of the touchscreen rests on the mini switches. In this embodiment, the mini switches are arranged between the frame and the touch sensor.

Preferably, an insulation which protects the device from being soiled is arranged between the touch surface or touch sensor and the frame.

Preferably, on one side of the frame, mini switches are arranged, and, on the opposing side to this side, one or more connecting elements are arranged, wherein one side of the touchscreen rests on the mini switches, and the opposing side of the touchscreen rests on a connecting element or several connecting elements. Such an embodiment enables a different haptic feedback, since the touchscreen cannot be depressed in all directions by pressure, as is the case in an embodiment in which the mini switches are arranged on all sides of the frame, instead it yields to pressure on only one side, while the other side, on which one or more connecting elements are arranged, does not yield.

Moreover, the object of the present invention is achieved by a method of the type described above, in which, due to contact with the touchscreen of the input and output device, a first signal for the detection of the position of a contact with an operating surface of the touchscreen is generated, and, due to pressure on the touchscreen of the input and output device, a second signal is generated, wherein the touchscreen is mounted on mini switches, by means of which the pressure exerted and the position on the touchscreen are detected.

In this method, the x,y coordinates of the fingers that contact the surface of the touchscreen or the touch plate thereof are determined, and, as soon as one of the mini switches is clicked, the selected control panel is executed.

The first and the second signals are preferably processed by a processor, whereby a control command associated with an operating element is generated, in order to control or regulate devices which are connected to the input and output device.

Upon generating pressure on the touchscreen, for example, due to an increased pressure of the finger of a user on the touchscreen, or due to the tapping/clicking of an application or of an operating element which is displayed on the touchscreen, preferably a haptic feedback is generated. The clicking sensation is very natural, since it is generated by the use of the mini switches.

Moreover, the object of the present invention is achieved by use of the input and output device according to the invention and the method according to the invention for controlling and regulating one or more devices of a vehicle, such as, for example, a motor vehicle, aircraft or rail vehicle.

Further details, features and advantages of implementations of the invention result from the following description of exemplary embodiments by reference to the associated figures, in which:
Figure 1 shows an exploded view of a first embodiment of an input and output device according to the invention;
Figure 2 shows an exploded view of a second embodiment of an input and output device according to the invention;
Figure 3 shows an exploded view of a third embodiment of an input and output device according to the invention;
Figures 4A, 4B and 4C show cross sections through the embodiments of the input and output devices shown in Figures 1 to 3;
Figure 5 shows a partial cross-sectional view of an input and output device,
Figure 6 shows an exploded view of a fourth embodiment of an input and output device according to the invention; and
Figure 7 shows a schematic representation of a method for actuating an input and output device according to the invention.

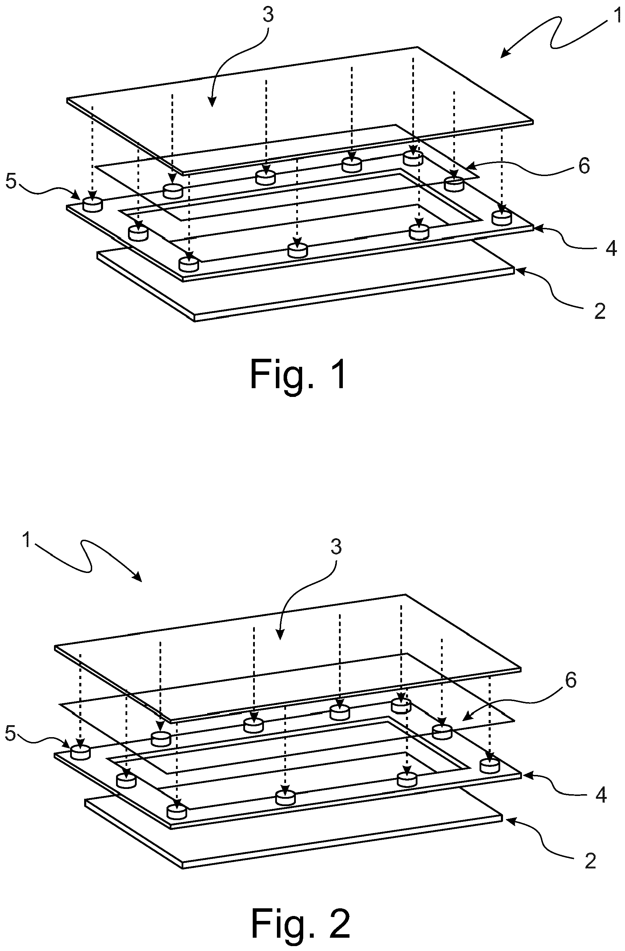

In Figures 1 to 3, different embodiments of an input and output device 1 are illustrated.

Figure 1 shows an input and output device 1 which comprises a screen 2 for displaying operating elements or information such as, for example, parameters of devices connected to the input and output device. Moreover, via a touchscreen, for example, a capacitive touchscreen, applications or operating elements displayed on the screen 2 can be selected. This occurs by contact with a (glass/transparent) touch plate 3.

As shown in Figure 1, the screen 2 is arranged in a fixed frame 4, which at the same time can also be a housing or a portion of a dashboard of a vehicle. With respect to the screen 2, the frame 4 forms a level area on which a plurality of mini switches 5 are arranged, wherein, in the embodiment shown in Figure 1, the mini switches 5 are distributed on the frame 4.

In Figure 1, eleven mini switches are displayed; it is understood that the input and output device 1 according to the invention can also have more or fewer mini switches 5.

The mini switches 5 are arranged on the frame 4 so that the edges of the touch plate 3 rest on the mini switches 5, so that, when pressure is exerted on the touch plate 3, the mini switches 5 are pressed/actuated. Which mini switches 5 are actuated depends on where the touch plate 3 is pressed, so that, by means of the mini switches 5 actuated in this manner, the position of the pressure point on the touch plate 3 can also be determined. This occurs by means of a processor (not shown in the figures) connected to the input and output device 1.

A (laminated) touch sensor 6 is arranged between the screen 2 and the touch plate 3, under the touch plate 3. The touch sensor 6 is dimensioned smaller than the touch plate 3, so that the mini switches 5 are arranged laterally around the touch sensor 6.

The second embodiment of the input and output device 1 shown in Figure 2 differs from the one shown in Figure 1 in that the touch plate 3 has the same dimensioning of the area as the touch sensor 6, so that the touch sensor 6 of the touchscreen, and not the touch plate 3, rests on the mini switches 5.

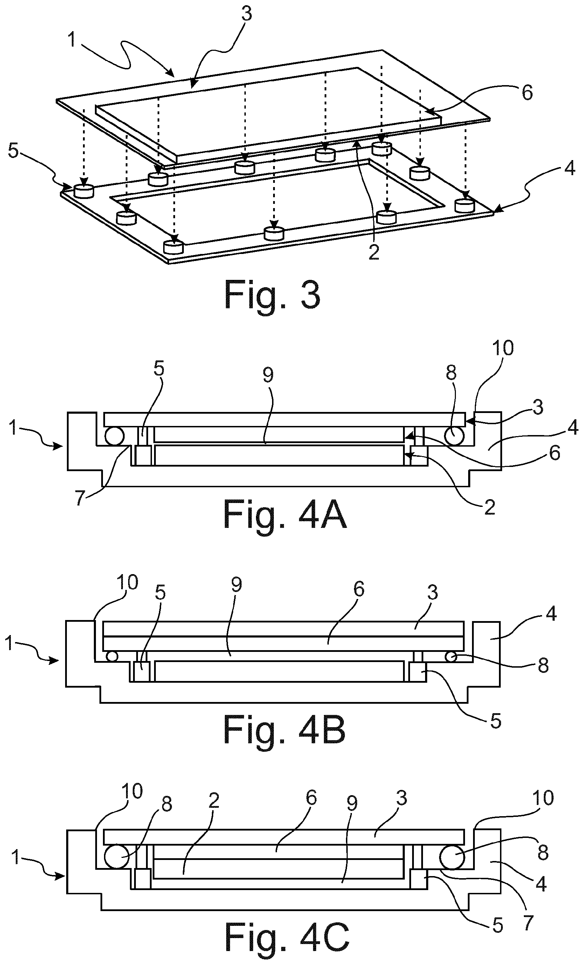

The third embodiment of the input and output device 1 shown in Figure 3 corresponds to the first embodiment shown in Figure 1, except for the arrangement of the touch sensor 6 and of the screen 2, which, in the embodiment shown in Figure 3, is arranged immediately under the touch plate 3, wherein the touch sensor 6 and the screen 2 are dimensioned smaller than the touch plate 3, so that the mini switches 5 extend laterally past the outer edges of the touch sensor 6 and of the screen 2, so that the touch plate 3 rests on the mini switches 5 which are arranged on the frame 4.

In Figures 4A, 4B and 4C, cross sections of the three embodiments of the input and output device 1 shown in Figures 1 to 3 are illustrated.

Figure 4A shows the first embodiment of the input and output device 1 shown in Figure 1, in which the screen 2 is arranged in the frame 4 and the mini switches 5 are arranged about the screen 2. The frame 4 has a first edge 7 which is in one plane with the surface of the screen. Insulation 8 is arranged on this first edge 7, which protects the device from being soiled, in that it seals the area between the first edge 7 of the frame 4 and the touch plate 3. The insulation 8 is designed to be flexible, so that it does not influence the movement of the touch plate 3, when pressure is applied to the touch plate 3. In addition, there is a gap 9 between the touch sensor 6 arranged under the touch plate 3, and the surface of the screen 2, which enables the touchscreen to be moved in the direction of the screen 2 when pressure is applied to the touch plate 3.

Moreover, the frame 4 or the housing has a second edge 10 which lies in the same plane as the touch plate 3.

In the second embodiment of the input and output device 1, which is illustrated in Figure 4B, the insulation 8 is dimensioned smaller, since the touch sensor 6 rests on the mini switches 5, and thus the distance between the first edge 7 of the frame 4 and the bottom side of the touch sensor 6 is also smaller.

In the third embodiment of the input and output device 1, which is illustrated in Figure 4C, the screen 2 is arranged under the touch sensor 6, so that the gap 9 is formed under the screen 2.

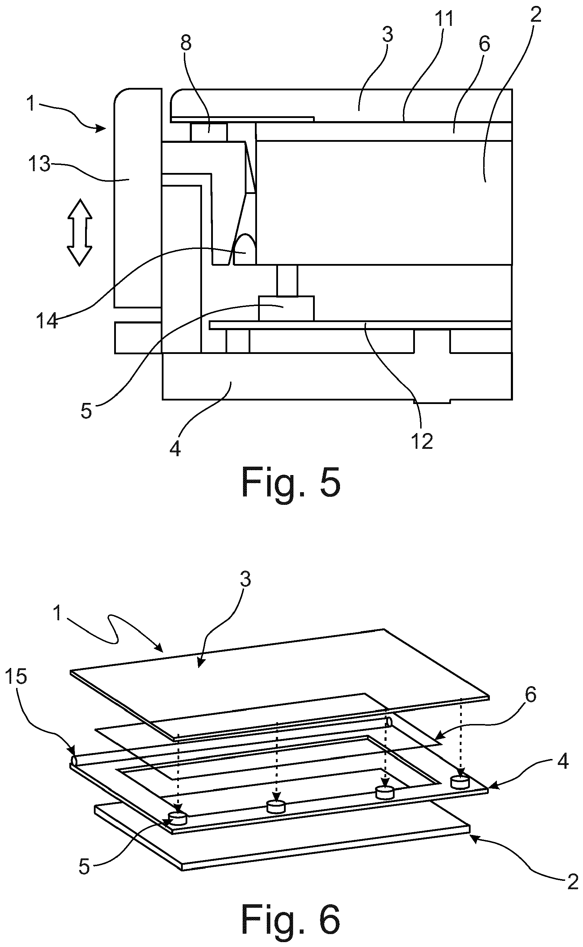

In Figure 5, a portion of a cross section of an embodiment of the input and output device 1 is illustrated, in which the screen 2 is arranged immediately under the touch plate 3 (of a glass lens) and joined with an adhesive 11 (LOCA: liquid optical clear adhesive). The mini switches 5 are arranged on the frame 4, wherein a printed wire board (PWB) 12 with the mini switches 5 on it is positioned between the mini switches 5 and the frame 4.

In the embodiment shown in Figure 5, the frame 4 has a composite frame 13 (or a guide for the screen 2), which is movably connected to the rest of the frame 4 (in the direction of the arrow), so that the composite frame 13, which is connected to the screen 2, for example, with an adhesive 14, is movably arranged in the frame 4.

By pressure on the touchscreen, the screen 2 is lowered with the composite frame 13, so that the mini switches 5, which are connected via the printed wire board 12 to the processor, are actuated.

The insulation 8 or a spacer, for example, an acrylic adhesive (PSA) is arranged between the composite frame 13 and the touch plate 3.

In Figure 6, another embodiment of input and output device 1 is illustrated, in which the mini switches 5 are arranged on only one side of the frame 4, and wherein a connecting element 15 is arranged on the opposing side so that the touchscreen or, as in the embodiment shown in Figure 6, the touch plate 3, is held firmly on one side by the connecting element 15, while, on the other side, it can be tilted by pressure on the touchscreen and thus on the mini switches 5.

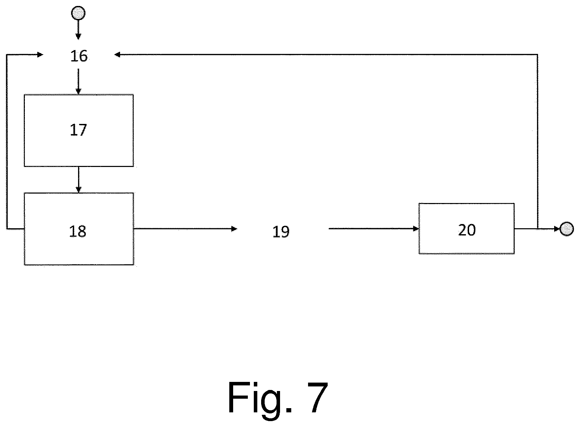

In Figure 7, the operation of the input and output device 1 is illustrated schematically.

By contacting 16 the touchscreen, the position of the fingers on the surface 17 and thus the selection of a software icon 18 (or of an application or a control panel) is determined. By a physical click 19 (by clicking on the icon), the software is executed 20 (the application is executed or the operating element is activated, respectively).

### List of reference numerals:

- 1: Input and output device
- 2: Screens
- 3: Touch plate, touch surface
- 4: Frame
- 5: Mini switch
- 6: Touch sensor
- 7: First edge
- 8: Insulation
- 9: Gap
- 10: Second edge
- 11: Adhesive
- 12: Printed circuit board
- 13: Composite frame
- 14: Adhesive
- 15: Connecting element
- 16: Contact
- 17: Position of the fingers on the surface
- 18: Selection of the software icon
- 19: Physical click
- 20: Execution of the software

## Claims

1. A combined input and output device (1) comprising
a screen (2) for displaying at least one operating element,
a touchscreen arranged over the screen (2), for detecting a position of a contact with the operating surface of the touchscreen, and
a frame (4),
**characterized in that** the screen (2) is arranged under the touchscreen in frame (4), and,
on the frame (4), a plurality of mini switches (5) are arranged, on which the touchscreen rests.

2. The input and output device (1) according to claim 1, in which a haptic signal can be output by actuation of said mini switches (5).

3. The input and output device (1) according to claim 1 or 2, in which the touchscreen comprises a touch surface (3) and a touch sensor (6).

4. The input and output device (1) according to Claim 3, in which the touch surface (3) of the touchscreen rests on said mini switches (5).

5. The input and output device (1) according to claim 3, in which the touch sensor (6) of the touchscreen rests on said mini switches (5).

6. The input and output device (1) according to any one of claims 3 to 5, in which an insulation (8) is arranged between the touch surface (3) or the touch sensor (6) and the frame (4).

7. The input and output device (1) according to any one of claims 1 to 5, in which said mini switches (5) are arranged on one side of the frame (4) and on the opposing side of the frame (4) one or more connecting elements (15) are arranged, wherein one side of the touchscreen rests on said mini switches (5) and the opposing side of the touchscreen rests on one connecting element (15) or on several connecting elements (15).

8. A method for operating an input and output device (1) comprising a touchscreen arranged in a frame (4), **characterized in that**
by contacting the touchscreen of said input and output device (1) a first signal for the detection of the position of a contact with an operating surface of the touchscreen is generated, and,
by pressure on the touchscreen of said input and output device (1) a second signal is generated, wherein the touchscreen is supported by mini switches (5), by means of which the pressure exerted and the position on the touchscreen are detected.

9. The method according to claim 8, in which the first and the second signals are processed by a processor.

10. The method according to claim 8 or 9, in which a haptic feedback is generated upon generating pressure on the touchscreen.

11. Use of an input and output device (1) according to any one of claims 1 to 7 and of the method according to any one of claims 8 to 10 for controlling and regulating one or more devices of a vehicle.
